# EUROPÄISCHE PATENTSCHRIFT

(11) **EP 4 620 290 B1**
(45) Veröffentlichungstag und Bekanntmachung des Hinweises auf die Patenterteilung: **02.12.2026**
(21) Anmeldenummer: 25164451.4
(22) Anmeldetag: 18.03.2025
(51) Int. Cl.: A01D 89/00

(54) **AUFNAHMEVORRICHTUNG FÜR EINE LANDWIRTSCHAFTLICHE ERNTEMASCHINE**
PICK-UP DEVICE FOR AN AGRICULTURAL HARVESTER
DISPOSITIF DE RAMASSAGE POUR UNE MOISSONNEUSE AGRICOLE

(30) Priorität: 20.03.2024 DE 102024107962
(43) Veröffentlichungstag der Anmeldung: 24.09.2025
(73) Patentinhaber: CLAAS Saulgau GmbH, 88348 Bad Saulgau (DE)
(72) Erfinder: König, Christian, 88094 Oberteuringen (DE); Kaufmann, Christoph, 88367 Hohentengen (DE)

(56) Entgegenhaltungen:
- EP-A1- 0 976 314
- CN-U- 211 240 899
- DE-A1- 102005 031 489
- DE-B- 1 223 599
- US-A- 3 722 190
- US-A1- 2023 309 456

## Beschreibung

Die Erfindung betrifft eine Aufnahmevorrichtung für eine landwirtschaftliche Erntemaschine.

DE 10 2012 011 574 B4 offenbart eine Aufnahmevorrichtung für eine landwirtschaftliche Erntemaschine. Die Aufnahmevorrichtung weist einen Hauptrahmen auf, der zur Ankopplung der Aufnahmevorrichtung an die landwirtschaftliche Erntemaschine ausgebildet ist. Ferner weist die Aufnahmevorrichtung eine Erntegutaufnahmeeinrichtung und eine Erntegutfördereinrichtung auf. Die Erntegutaufnahmeeinrichtung ist am Hauptrahmen befestigt und zur Erntegutaufnahme von einem Untergrund eingerichtet. Die Erntegutfördereinrichtung ist am Hauptrahmen über Träger schwenkbar befestigt, wobei die Erntegutfördereinrichtung in Zusammenwirkung mit einem Bodenblech zur Förderung des durch die Erntegutaufnahmeeinrichtung aufgenommenen Ernteguts eingerichtet ist.

Bislang bereitet die Einstellung eines gewünschten Abstands zwischen der Erntegutfördereinrichtung und dem Bodenblech oder einem Förderboden Schwierigkeiten. Die Einstellung des Abstands zwischen Erntegutfördereinrichtung und Erntegutaufnahmeeinrichtung ist jedoch für einen ordnungsgemäßen Transport des aufgenommenen Ernteguts insbesondere im Übergabebereich zwischen Erntegutaufnahmeeinrichtung und Erntegutfördereinrichtung im Bereich des dort positionierten Bodenblechs von Bedeutung.

DE 10 2012 011 591 C5 offenbart eine weitere Aufnahmevorrichtung für eine landwirtschaftliche Erntemaschine mit einer Erntegutaufnahmeeinrichtung und einer Erntegutfördereinrichtung.

Eine gattungsgemäße Aufnahmevorrichtung ist aus DE 10 2005 031489 A1 bekannt.

Hiervon ausgehend liegt der vorliegenden Erfindung die Aufgabe zugrunde, eine neuartige Aufnahmevorrichtung für eine landwirtschaftliche Erntemaschine zu schaffen.

Diese Aufgabe wird durch eine Aufnahmevorrichtung für eine landwirtschaftliche Erntemaschine nach Anspruch 1 gelöst.

Erfindungsgemäß ist am Hauptrahmen mindestens ein Exzenterkörper befestigt, an welchem ein jeweiliger Träger unmittelbar oder mittelbar aufliegt, wobei die Position des mindestens einen Exzenterkörper den Abstand zwischen der Erntegutfördereinrichtung und dem Bodenblech bestimmt.

Über den mindestens einen Exzenterkörper kann der Abstand zwischen der Erntegutfördereinrichtung und dem Bodenblech einfach geändert werden. Beim Einsatz der Aufnahmevorrichtung im Feld kann durch eine einfache Änderung der Position des jeweiligen Exzenterkörpers am Hauptrahmen der Abstand zwischen der Erntegutfördereinrichtung und dem Bodenblech bzw. der Erntegutaufnahmeeinrichtung verändert werden. Hierzu werden keine zusätzlichen Baugruppen benötigt. Es muss lediglich die Befestigungsposition des Exzenterkörpers am Hauptrahmen geändert werden.

Vorzugsweise ist am Hauptrahmen mindestens eine Ausnehmung ausgebildet, in welche ein jeweiliger Exzenterkörper mit einem Vorsprung in einer von mehreren, insbesondere in einer von zwei, möglichen Positionen formschlüssig eingreift und am Hauptrahmen befestigt ist, wobei die Position, in welcher der Vorsprung des jeweiligen Exzenterkörpers in die jeweilige Ausnehmung eingreift, den Abstand zwischen der Erntegutfördereinrichtung und dem Bodenblech bestimmt. Dies erlaubt eine besonders einfache Änderung des Abstands zwischen der Erntegutfördereinrichtung und dem Bodenblech.

Vorzugsweise sind am Hauptrahmen unterhalb der schwenkbar am Hauptrahmen angreifenden Träger Wangen ausgebildet, wobei an den Wangen jeweils eine Ausnehmung zur Aufnahme des Vorsprungs eines jeweiligen Exzenterkörper und zur Befestigung desselben am Hauptrahmen ausgebildet ist. Der jeweilige Exzenterkörper ist dann, wenn sein Vorsprung in die jeweilige Ausnehmung eingreift, über eine Schraube an der jeweiligen Wange des Hauptrahmens befestigt. Auch dies erlaubt eine besonders einfache Änderung des Abstands zwischen der Erntegutfördereinrichtung und dem Bodenblech.

Vorzugsweise weist der jeweilige Exzenterkörper einen den Vorsprung aufweisenden Grundkörper auf, wobei der Vorsprung exzentrisch am Grundkörper angreift. Insbesondere weist der Exzenterkörper ferner einen gegenüber dem Grundkörper drehbaren Rollenkörper auf, der den Grundkörper radial außen umgibt. Dann, wenn der Exzenterkörper den drehbaren Rollenkörper aufweist, ist eine Beschädigungsgefahr für den Exzenterkörper sowie der unmittelbar oder mittelbar auf dem Exzenterkörper aufliegenden Träger für die Erntegutfördereinrichtung reduziert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert.

Dabei zeigt:
- Fig. 1: eine Seitenansicht einer erfindungsgemäßen Aufnahmevorrichtung für eine landwirtschaftliche Erntemaschine in einem ersten Zustand derselben,
- Fig. 2: ein Detail der Fig. 1 in perspektivischer Explosionsdarstellung;
- Fig. 3: eine Seitenansicht der erfindungsgemäßen Aufnahmevorrichtung für eine landwirtschaftliche Erntemaschine in einem zweiten Zustand derselben,
- Fig. 4: ein Detail der Fig. 3 in perspektivischer Explosionsdarstellung.

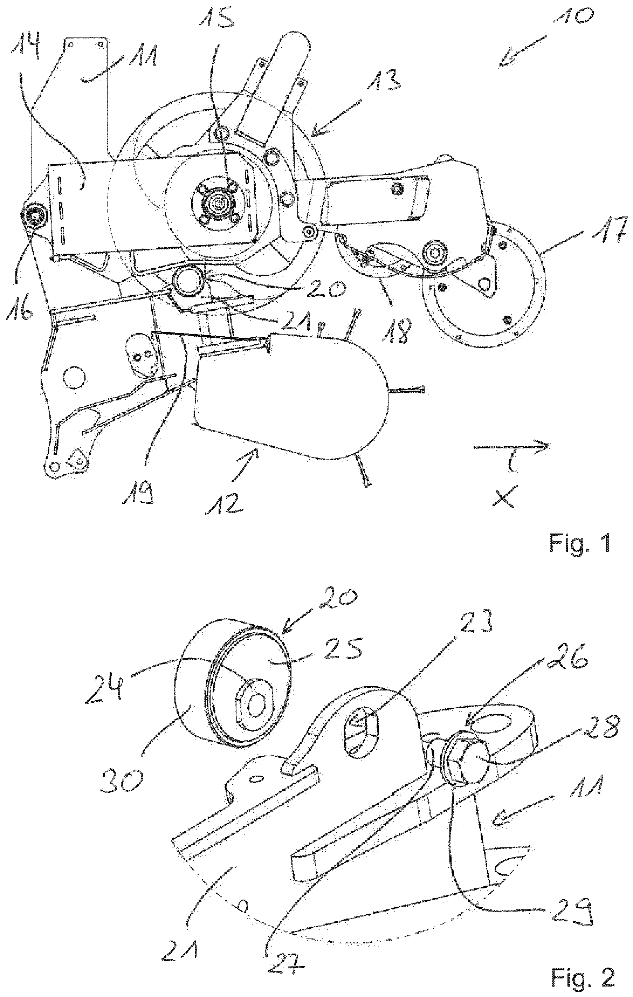

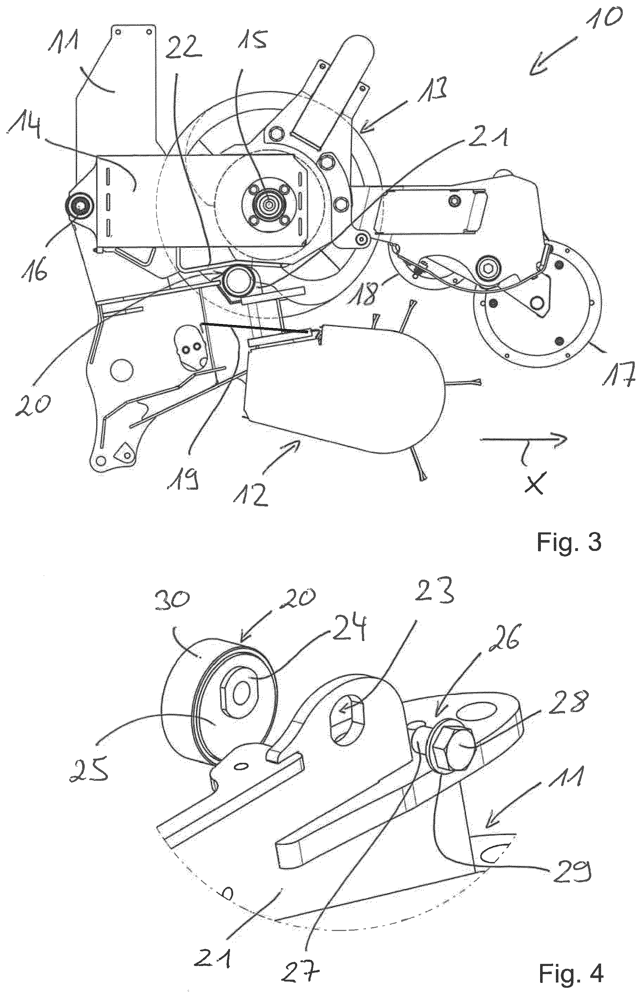

Fig. 1 und 3 zeigen eine Seitenansicht einer erfindungsgemäßen Aufnahmevorrichtung 10 für eine landwirtschaftliche Erntemaschine.

Die Aufnahmevorrichtung 10 weist einen Hauptrahmen 11 auf, der eingerichtet ist, die Aufnahmevorrichtung 10 an eine landwirtschaftliche Erntemaschine anzukoppeln. Die Aufnahmevorrichtung 10 weist weiterhin eine Erntegutaufnahmeeinrichtung 12 und eine Erntegutfördereinrichtung 13 auf, wobei sich Fig. 1 und 3 durch den Abstand zwischen der Erntegutfördereinrichtung 13 der Aufnahmevorrichtung 10 und einem Bodenblech 19 der Aufnahmevorrichtung 10 unterscheiden. Das Bodenblech 19 ist an der Erntegutaufnahmeeinrichtung 12 angeordnet und bildet einen Förderboden für die Erntegutfördereinrichtung 13.

Die Erntegutaufnahmeeinrichtung 12 der Aufnahmevorrichtung 10 ist am Hauptrahmen 11 befestigt, wobei die Erntegutaufnahmeeinrichtung 12 eingerichtet ist, Erntegut von einem Untergrund bzw. Boden aufzunehmen.

Die Erntegutfördereinrichtung 13 der Aufnahmevorrichtung 10 ist an Trägern 14 drehbar gelagert und über die Träger 14 am Hauptrahmen 11 schwenkbar befestigt. So zeigen Fig. 1, 3 eine Drehachse 15, um welche die Erntegutfördereinrichtung 13 drehbar an den Trägern 14 gelagert ist, wobei zu beiden seitlichen Enden der Erntegutfördereinrichtung 13 jeweils ein Träger 14 angeordnet ist. Ferner zeigen Fig. 1 und 3 eine Schwenkachse 16, um welche die Träger 14 und über die Träger 14 die Erntegutfördereinrichtung 13 relativ zum Hauptrahmen 11 schwenkbar ist.

Ferner zeigen Fig. 1 und 3 Niederhalterollen 17, 18 der Aufnahmevorrichtung 10. Die Niederhalterollen 17, 18 sind ebenso wie die Erntegutfördereinrichtung 13 schwenkbar am Rahmen 11 montiert, und zwar zusammen mit der Erntegutfördereinrichtung 13 über die seitlichen Träger 14. Die Niederhalterollen 17, 18 liegen im Betrieb oben auf einem Schwad aus Erntegut auf und stellen durch das Niederhalten des Schwads sicher, dass das Erntegut von der Erntegutaufnahmeeinrichtung 12 vollständig aufgenommen und in Richtung auf die Erntegutfördereinrichtung 13 gelangen kann.

Fig. 1 zeigt in einem Übergabebereich zwischen der Erntegutaufnahmeeinrichtung 12 und der Erntegutfördereinrichtung 13 das Bodenblech 19, das unterhalb der Erntegutfördereinrichtung 13 zwischen der Erntegutaufnahmeeinrichtung 12 und dem Hauptrahmen 11 angeordnet ist. Die Erntegutfördereinrichtung 13, die als Querförderschnecke ausführt ist, fördert das Erntegut in Zusammenwirkung mit dem Bodenblech 19 zu einem Mittenbereich der Aufnahmevorrichtung 10, wo es an die Erntemaschine weitergegeben wird.

Im Betrieb wird die Aufnahmevorrichtung 10 von der landwirtschaftlichen Erntemaschine in der Fortbewegungsrichtung X bewegt, sodass demnach das Bodenblech 19, in dieser Fortbewegungsrichtung X gesehen, hinter der Erntegutaufnahmeeinrichtung 12 angeordnet ist.

Um den Abstand zwischen der Erntegutfördereinrichtung 13 und dem Bodenblech 19 einfach einstellen zu können, ist am Hauptrahmen 11 mindestens ein Exzenterkörper 20 befestigt.

Insbesondere ist an seitlichen Wangen 21 des Hauptrahmens 11, die unterhalb der schwenkbar am Hauptrahmen 11 angreifenden seitlichen Träger 14 für die Erntegutfördereinrichtung 13 angeordnet sind, jeweils ein Exzenterkörper 20 befestigt, wobei der jeweilige Träger 14 unmittelbar oder mittelbar an dem jeweiligen Exzenterkörper 20 aufliegt.

In Fig. 1 und 3 liegt der jeweilige Träger 14 mittelbar über ein am Träger 14 befestigtes Auflageelement 22 auf dem jeweiligen Exzenterkörper 20 auf.

Die Position, in welcher der jeweilige Exzenterkörper 20 am Hauptrahmen 11 der Aufnahmevorrichtung 10 befestigt ist, bestimmt den Abstand zwischen der Erntegutfördereinrichtung 13 der Aufnahmevorrichtung 10 und der Erntegutaufnahmeeinrichtung 12 der Aufnahmevorrichtung 10 bzw. zwischen der Erntegutfördereinrichtung 13 und dem Bodenblech 19 bzw. dem Förderboden.

An den insbesondere in Fig. 2, 4 gezeigten seitlichen Wangen 21 des Hauptrahmens 11 der Aufnahmevorrichtung 10 sind Ausnehmungen 23 ausgebildet. In diese Ausnehmungen 23 greift ein jeweiliger Exzenterkörper 20 mit einem Vorsprung 24 in einer von mehreren, vorzugsweise in einer von zwei, möglichen Positionen formschlüssig ein. Diejenige Position, in welcher der Vorsprung 24 des jeweiligen Exzenterkörpers 20 in die jeweilige Ausnehmung 23 eingreift und dann am Hauptrahmen 11 gefestigt ist, bestimmt den Abstand zwischen der Erntegutfördereinrichtung 13 und der Erntegutaufnahmeeinrichtung 12 bzw. den Abstand zwischen der Erntegutfördereinrichtung 13 und dem Förderblech 19.

Fig. 4 zeigt die Position zur Befestigung des Exzenterkörpers 20 am Hauptrahmen 11, mit welcher der in Fig. 3 gezeigte relativ kleine Abstand zwischen der Erntegutfördereinrichtung 13 und dem Bodenblech 19 einstellbar ist. Fig. 2 zeigt die Montageposition für den jeweiligen Exzenterkörper 20 am Hauptrahmen 11, mit welcher der in Fig. 1 gezeigte relativ große Abstand zwischen der Erntegutfördereinrichtung 13 und dem Bodenblech 19 bereitgestellt werden kann. Im Bereich beider seitlicher Wangen 21 des Hauptrahmens 11 wird für den jeweiligen Exzenterkörper 20 die gleiche Montageposition am Hauptrahmen 11 gewählt.

Wie bereits ausgeführt, weist der jeweilige Exzenterkörper 20 den Vorsprung 24 auf, der in seiner jeweiligen Montageposition an Hauptrahmen 11 formschlüssig in die jeweilige Ausnehmung 23 der jeweiligen Wange 21 des Hauptrahmens 11 eingreift. Dieser Vorsprung 24 ist an einem Grundkörper 25 des jeweiligen Exzenterkörpers 20 ausgebildet und greift exzentrisch am jeweiligen Grundkörper 25 an. Der Grundkörper 25 ist dabei im gezeigten Ausführungsbeispiel zylindrisch ausgebildet. Der Vorsprung 24 ist von der Längsmittelachse des zylindrischen Grundkörpers 25 beabstandet, sodass die exzentrische Position des Vorsprungs 24 am Grundkörper 25 bereitgestellt wird.

Vorsprung 24 und Ausnehmung 23 sind derart konturiert, dass im gezeigten Ausführungsbeispiel der Exzenterkörper 20 lediglich in einer von zwei möglichen Positionen an der jeweiligen Wange 21 montiert werden kann, die um 180° zueinander verdreht sind. Es ist auch möglich, Vorsprung 24 und Ausnehmung 23 derart zu konturieren, dass der Exzenterkörper 20 lediglich in einer von drei oder vier möglichen Positionen an der jeweiligen Wange 21 montiert werden kann, die um 120° oder 90° zueinander verdreht sind. Die Anzahl der möglichen Positionen zur Befestigung des jeweiligen Exzenterkörpers 20 an der jeweiligen Wange 21 entspricht vorzugsweise der Anzahl der bereitstellbaren unterschiedlichen Abstände zwischen Erntegutfördereinrichtung 13 und der Erntegutaufnahmeeinrichtung 12.

Der Exzenterkörper 20 greift von einer ersten Seite der Wange 21 aus mit seinem Vorsprung 24 in die jeweilige Ausnehmung 23 der Wange 21 ein. Von einer gegenüberliegenden Seite der Wange 21 aus wird der jeweilige Exzenterkörper 20 über eine Befestigungsschraube 26 an der jeweiligen Wange 21 des Hauptrahmens 11 montiert, wobei hierzu ein Gewindeschaft 27 der Befestigungsschraube 26 in den Vorsprung 24 des jeweiligen Exzenterkörpers 20 eingreift und sich ein Schraubenkopf 28 der Befestigungsschraube 26 an der jeweiligen Wange 21 abstützt, insbesondere über eine Unterlegscheibe 29.

Im gezeigten Ausführungsbeispiel liegt, wie oben bereits ausgeführt, der jeweilige Träger 14 an dem jeweiligen Exzenterkörper 20 mittelbar über das jeweilige Auflageelement 22 auf. Der jeweilige Träger 14 kann auch unmittelbar auf dem jeweiligen Exzenterkörper 20 aufliegen.

Im gezeigten, bevorzugten Ausführungsbeispiel weist der jeweilige Exzenterkörper 20 zusätzlich zu dem Grundkörper 25 und dem am Grundkörper 25 ausgebildeten Vorsprung 24 einen Rollenkörper 30 auf, der relativ zum Grundkörper 25 drehbar ist. Der Rollenkörper 30 umgibt den Grundkörper 25 radial außen und ist in Form eines Rings ausgebildet. Durch die Drehbarkeit des Rollenkörpers 30 relativ zum Grundkörper 25 des jeweiligen Exzenterkörpers 20 kann eine besonders vorteilhafte, mittelbare oder unmittelbare Auflage des jeweiligen Trägers 14 am jeweiligen Exzenterkörper 20 unter Minimierung einer Beschädigungsgefahr gewährleistet werden.

Die Position des jeweiligen Exzenterkörpers 20 an der jeweiligen Wange 21 des Hauptrahmens 11 kann mit einfachen Mitteln im Feld geändert werden. Hierzu muss lediglich die jeweilige Befestigungsschraube 26 gelöst und die Position des Exzenterkörpers 20 an der Wange 21 geändert und nachfolgend die Befestigungsschraube 26 wieder angezogen werden. Dies ist innerhalb kurzer Zeit im Feld möglich. So kann der Abstand zwischen der Erntegutfördereinrichtung 13 und der Erntegutaufnahmeeinrichtung 12 bzw. dem Förderblech 19 im Feld einfach an unterschiedliche Schwadhöhen angepasst werden.

### Bezugszeichenliste

- 10: Aufnahmevorrichtung
- 11: Hauptrahmen
- 12: Erntegutaufnahmeeinrichtung
- 13: Erntegutfördereinrichtung
- 14: Träger
- 15: Drehachse
- 16: Schwenkachse
- 17: Niederhalterolle
- 18: Niederhalterolle
- 19: Bodenblech
- 20: Exzenterkörper
- 21: Wange
- 22: Auflageelement
- 23: Ausnehmung
- 24: Vorsprung
- 25: Grundkörper
- 26: Befestigungsschraube
- 27: Gewindeschaft
- 28: Schraubenkopf
- 29: Unterlegscheibe
- 30: Rollenkörper

## Patentansprüche

1. Aufnahmevorrichtung (10) für eine landwirtschaftliche Erntemaschine,
mit einem Hauptrahmen (11), der zur Ankopplung der Aufnahmevorrichtung (10) an die landwirtschaftliche Erntemaschine eingerichtet ist,
mit einer Erntegutaufnahmeeinrichtung (12), die am Hauptrahmen (11) befestigt ist, wobei die Erntegutaufnahmeeinrichtung (12) zur Erntegutaufnahme von einem Untergrund eingerichtet ist,
mit einer Erntegutfördereinrichtung (13), die am Hauptrahmen (11) über Träger (14) derart befestigt ist, dass die Erntegutfördereinrichtung (13) an den Trägern (14) drehbar gelagert ist und zusammen mit den Trägern (14) gegenüber dem Hauptrahmen (11) schwenkbar ist, wobei die Erntegutfördereinrichtung (13) in Zusammenwirkung mit einem Bodenblech (19) zur Förderung des durch die Erntegutaufnahmeeinrichtung (12) aufgenommenen Ernteguts eingerichtet ist,
**dadurch gekennzeichnet, dass**
am Hauptrahmen (11) mindestens ein Exzenterkörper (20) befestigt ist, an welchem ein jeweiliger Träger (14) unmittelbar oder mittelbar aufliegt, wobei die Position des mindestens einen Exzenterkörpers (20) am Hauptrahmen (11) den Abstand zwischen der Erntegutfördereinrichtung (13) und dem Bodenblech (19) bestimmt.

2. Aufnahmevorrichtung (10) nach Anspruch 1, **dadurch gekennzeichnet, dass**
am Hauptrahmen (11) mindestens eine Ausnehmung (23) ausgebildet ist, in welche ein jeweiliger Exzenterkörper (20) mit einem Vorsprung (24) in einer von mehreren möglichen Positionen formschlüssig eingreift, wobei die Position, in welcher der Vorsprung (24) des jeweiligen Exzenterkörpers (20) in die jeweilige Ausnehmung (23) eingreift, den Abstand zwischen der Erntegutfördereinrichtung (13) und dem Bodenblech (19) bestimmt.

3. Aufnahmevorrichtung (10) nach Anspruch 2, **dadurch gekennzeichnet, dass**
in die jeweilige Ausnehmung (23) ein jeweiliger Exzenterkörper (20) mit dem Vorsprung (24) in einer von zwei möglichen Positionen formschlüssig eingreift.

4. Aufnahmevorrichtung (10) nach Anspruch 2 oder 3, **dadurch gekennzeichnet, dass**
der jeweilige Exzenterkörper (20) einen den Vorsprung (24) aufweisenden Grundkörper (25) aufweist, wobei der Vorsprung (24) exzentrisch am Grundkörper (25) angreift.

5. Aufnahmevorrichtung (10) nach Anspruch 4, **dadurch gekennzeichnet, dass**
der jeweilige Exzenterkörper (20) einen gegenüber dem Grundkörper (25) drehbaren Rollenkörper (30) aufweist, der den Grundkörper (25) radial außen umgibt.

6. Aufnahmevorrichtung (10) nach einem der Ansprüche 2 bis 5, **dadurch gekennzeichnet, dass**
am Hauptrahmen (11) unterhalb der schwenkbar am Hauptrahmen (11) angreifenden Träger (14) Wangen (21) ausgebildet sind,
an den Wangen (21) jeweils eine Ausnehmung (23) zur Aufnahme des Vorsprungs (24) eines jeweiligen Exzenterkörper (20) ausgebildet ist.

7. Aufnahmevorrichtung (10) nach Anspruch 6, **dadurch gekennzeichnet, dass**
der jeweilige Exzenterkörper (20) dann, wenn sein Vorsprung (24) in die jeweilige Ausnehmung (23) eingreift, über eine Schraube (26) an der jeweiligen Wange (21) des Hauptrahmens (11) befestigt ist.

8. Aufnahmevorrichtung (10) nach Anspruch 7, **dadurch gekennzeichnet, dass**
sich in die Ausnehmung (23) der jeweiligen Wange (21) von einer ersten Seite derselben der Vorsprung (24) eines jeweiligen Exzenterkörpers (20) hinein erstreckt,
sich von einer zweiten Seite der jeweiligen Wange (21) ein Gewindeschaft (27) einer jeweiligen Schraube (26) in den Vorsprung (24) des jeweiligen Exzenterkörpers (20) hinein erstreckt und sich mit einem Schraubenkopf (28) an der jeweiligen Wange (21) abstützt.

## Claims

1. Pick-up apparatus (10) for an agricultural harvester,
with a main frame (11) designed to connect the pick-up apparatus (10) to the agricultural harvester,
with a crop collector (12) attached to the main frame (11), the crop collector (12) being designed to pick up crops from a ground surface, and
with a crop conveyor (13), which is attached to the main frame (11) via brackets (14) in such a way that the crop conveyor (13) is mounted rotatably on the brackets (14) and is pivotable together with the brackets (14) in relation to the main frame (11), wherein the crop conveyor (13) is designed, in conjunction with a floor plate (19), to convey the crops picked up by the crop collector (12),
**characterized in that**
at least one eccentric body (20) is attached to the main frame (11), on which body a respective bracket (14) is directly or indirectly supported, wherein the position of the at least one eccentric body (20) on the main frame (11) determines the distance between the crop conveyor (13) and the floor plate (19).

2. Pick-up apparatus (10) according to Claim 1,
**characterized in that**
at least one recess (23) is formed on the main frame (11), in which recess a respective eccentric body (20) engages positively with a projection (24) in one of several possible positions, wherein the position in which the projection (24) of the respective eccentric body (20) engages in the respective recess (23) determines the distance between the crop conveyor (13) and the floor plate (19).

3. Pick-up apparatus (10) according to Claim 2,
**characterized in that**
a respective eccentric body (20) with the projection (24) engages positively in the respective recess (23) in one of two possible positions.

4. Pick-up apparatus (10) according to Claim 2 or 3,
**characterized in that**
the respective eccentric body (20) has a base body (25) having the projection (24), wherein the projection (24) lies eccentrically on the base body (25).

5. Pick-up apparatus (10) according to Claim 4,
**characterized in that**
the respective eccentric body (20) has a roller body (30) which is rotatable relative to the base body (25) and which radially surrounds the outside of the base body (25).

6. Pick-up apparatus (10) according to any one of Claims 2 to 5, **characterized in that**
cheeks (21) are formed on the main frame (11), below the brackets (14) pivotably mounted on the main frame (11),
and
a respective recess (23) for receiving the projection (24) of a respective eccentric body (20) is formed on the cheeks (21).

7. Pick-up apparatus (10) according to Claim 6,
**characterized in that**
the respective eccentric body (20), when its projection (24) engages in the respective recess (23), is fastened to the respective cheek (21) of the main frame (11) via a screw (26).

8. Pick-up apparatus (10) according to Claim 7,
**characterized in that**
the projection (24) of a respective eccentric body (20) extends into the recess (23) of the respective cheek (21) from a first side of the latter, and
a threaded shaft (27) of a respective screw (26) extends into the projection (24) of the respective eccentric body (20) from a second side of the respective cheek (21) and is supported on the respective cheek (21) with a screw head (28).

## Revendications

1. Dispositif de ramassage (10) pour une machine de récolte agricole,
comprenant un châssis principal (11) conçu pour atteler le dispositif de ramassage (10) à la machine de récolte agricole,
comprenant un dispositif de ramassage de produit récolté (12) fixé au châssis principal (11), le dispositif de ramassage de produit récolté (12) étant conçu pour ramasser du produit récolté sur un sol,
comprenant un dispositif de convoyage de produit récolté (13) fixé au châssis principal (11) par l'intermédiaire de supports (14) de telle sorte que le dispositif de convoyage de produit récolté (13) est monté de manière rotative sur les supports (14) et peut pivoter conjointement avec les supports (14) par rapport au châssis principal (11), le dispositif de convoyage de produit récolté (13) étant conçu pour convoyer, en coopération avec une tôle de fond (19), le produit récolté ramassé par le dispositif de ramassage de produit récolté (12),
**caractérisé en ce que**
au moins un corps excentrique (20) est fixé au châssis principal (11), sur lequel repose directement ou indirectement un support respectif (14), la position de l'au moins un corps excentrique (20) sur le châssis principal (11) déterminant la distance entre le dispositif de convoyage de produit récolté (13) et la tôle de fond (19).

2. Dispositif de ramassage (10) selon la revendication 1, **caractérisé en ce que**
au moins un évidement (23) est formé dans le châssis principal (11), dans lequel un corps excentrique respectif (20) s'engage par complémentarité de forme au moyen d'une saillie (24) dans l'une de plusieurs positions possibles, la position dans laquelle la saillie (24) du corps excentrique respectif (20) s'engage dans l'évidement respectif (23) déterminant la distance entre le dispositif de convoyage de produit récolté (13) et la tôle de fond (19).

3. Dispositif de ramassage (10) selon la revendication 2, **caractérisé en ce que**
un corps excentrique respectif (20) s'engage par complémentarité de forme dans l'évidement respectif (23) au moyen de la saillie (24) dans l'une de deux positions possibles.

4. Dispositif de ramassage (10) selon la revendication 2 ou 3, **caractérisé en ce que**
le corps excentrique respectif (20) comporte un corps de base (25) présentant la saillie (24), la saillie (24) étant disposée de manière excentrée sur le corps de base (25).

5. Dispositif de ramassage (10) selon la revendication 4, **caractérisé en ce que**
le corps excentrique respectif (20) comporte un corps de rouleau (30) rotatif par rapport au corps de base (25), qui entoure le corps de base (25) radialement à l'extérieur.

6. Dispositif de ramassage (10) selon l'une des revendications 2 à 5, **caractérisé en ce que**
des flasques (21) sont formés sur le châssis principal (11) au-dessous des supports (14) montés de manière pivotante sur le châssis principal (11),
un évidement (23) destiné à recevoir la saillie (24) d'un corps excentrique respectif (20) est formé sur chacun des flasques (21).

7. Dispositif de ramassage (10) selon la revendication 6, **caractérisé en ce que**
le corps excentrique respectif (20), lorsque sa saillie (24) s'engage dans l'évidement respectif (23), est fixé par une vis (26) au flasque respectif (21) du châssis principal (11).

8. Dispositif de ramassage (10) selon la revendication 7, **caractérisé en ce que**
la saillie (24) d'un corps excentrique respectif (20) s'étend dans l'évidement (23) du flasque respectif (21) depuis un premier côté de celui-ci,
une tige filetée (27) d'une vis respective (26) s'étend, depuis un deuxième côté du flasque respectif (21), dans la saillie (24) du corps excentrique respectif (20) et prend appui par une tête de vis (28) sur le flasque respectif (21).
